# EUROPÄISCHE PATENTSCHRIFT

(11) **EP 0 934 800 B1**
(45) Veröffentlichungstag und Bekanntmachung des Hinweises auf die Patenterteilung: **25.06.2003**
(21) Anmeldenummer: 99102292.2
(22) Anmeldetag: 05.02.1999
(51) Int. Cl.: B23Q 1/25, B23Q 7/04, B23Q 16/04, B23K 37/04

(54) **Vorrichtung zur mehrseitigen Bearbeitung von Hohlprofilen**
Device for working upon an hollow profile along a plurality of sides
Dispositif pour l'usinage des profilés creux le lomg de plusieurs faces

(30) Priorität: 05.02.1998 DE 19804533; 25.03.1998 DE 19812999
(43) Veröffentlichungstag der Anmeldung: 11.08.1999
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- EP-A- 0 493 666
- EP-A- 0 556 760
- EP-A- 0 558 982
- EP-A- 0 787 560

## Beschreibung

Die Erfindung betrifft eine Vorrichtung zur mehrseitigen Bearbeitung von Hohlprofilen oder dergleichen stabförmigen Werkstücken mittels wenigstens einer an einem Maschinengestell verfahrbaren Bearbeitungseinheit, mit einer in dem Maschinengestell gelagerten Aufspanneinrichtung für das zu bearbeitende Hohlprofil, wobei die Aufspanneinrichtung im Maschinengestell um eine parallel zur Längsachse des Hohlprofils verlaufende Schwenkachse schwenkbar gelagert ist.

Die Herstellung von Bohrungen und profilierten Durchbrüchen an Hohlprofilen, bspw. zur Aufnahme von Schlössern und Beschlägen für Fenster- und Türrahmen, erfolgt üblicherweise entweder durch spannende Bearbeitung, nämlich Bohren und Fräsen, oder durch Plasmaschneiden.

Eine Vorrichtung zur mehrseitigen Bearbeitung von Hohlprofilen der eingangs genannten Art ist bereits aus der EP-A-0 558 982 bekannt. Um eine stabile Aufspannmöglichkeit für das Hohlprofil und eine gute Zugänglichkeit des Bearbeitungsbereichs zu gewährleisten, weist die Aufspanneinrichtung zwei im Abstand zueinander angeordnete, starr miteinander verbundene Stirnscheiben auf. Jede Stirnscheibe besitzt eine sich mindestens bis zur Scheibenmitte erstreckende Aussparung zur Aufnahme des Hohlprofils und bildet an ihrem Umfang eine sich über einen Bogenwinkel von annähernd 270° erstreckende konzentrisch zur Schwenkachse verlaufende Kreisbogenführung, mittels welcher die Stirnscheiben im Maschinengestell gelagert sind. Durch diese Ausführungsform ist erreicht, daß das zu bearbeitende Hohlprofil im Bereich zwischen den beiden Stirnscheiben für die Bearbeitungseinheit weitestgehend frei zugänglich ist, so daß in allen Schwenkstellungen alle erforderlichen Seitenflächen bearbeitet werden können.

Es hat sich jedoch gezeigt, daß die bekannte Wendeeinrichtung hinsichtlich des erforderlichen Bauraumes und ihrer Handhabung eine Verbesserung zugänglich ist.

EP-A- 787560 wird als nächstliegender stand der Technik angesehen und offenbart eine Vorrichtung wie im Oberbegriff des Anspruchs 1 definiert.

Aufgabe der Erfindung ist es, eine Vorrichtung der eingangs genannten Art anzugeben, die bei einfachem Aufbau und stabiler Aufspannmöglichkeit eine mehrseitige Bearbeitung des Werkstückes bei guter Zugänglichkeit des Bearbeitungsbereiches und kurzen Verfahrwegen der Bearbeitungseinheit ermöglicht.

Diese Aufgabe wird gelöst von einer Vorrichtung mit den kennzeichnenden Merkmalen des Anspruchs 1.

Der konstruktive Aufbau der Aufspanneinrichtung mit wenigstens zwei Spannelementen für das zu bearbeiteten Werkstück, welche drehbar an mit dem Maschinengestell verbundenen Haltearmen gelagert und in unterschiedlichen Schwenklagen arretierbar sind, ermöglicht eine einfache Bauweise, welche gleichwohl eine stabile und sichere Aufspannung des Werkstückes gewährleistet. Durch die Lagerung der Spannelemente an Haltearmen, welche von dem Maschinengestell abkragen, ergibt sich eine günstige Anordnung des Drehpunktes, so daß die Seitenflächen des Werkstückes in einfacher Weise mit kleinen Verfahrwegen der Bearbeitungseinheit bearbeitet werden können.

Die Verfahrwege der wenigstens einen Bearbeitungseinheit lassen sich nach einer ersten besonderen Ausführungsform der Erfindung dadurch minimieren, daß die Aufspannflächen der Spannelemente in den jeweiligen Schwenkstellungen die jeweils angrenzende Außenseite der Haltearme mit relativ geringem Abstand überragen. Wenn beispielsweise die Auflagefläche von einer anfänglichen Horizontalen in eine Vertikale verschwenkt wird, bedarf es gegebenenfalls nur eines geringfügigen Nachfahrens der Bearbeitungseinheit, damit diese sich beispielsweise wieder in der Mitte des Profiles befindet. Die Taktzeiten zur mehrseitigen Bearbeitung von Hohlprofilen lassen sich damit wesentlich verkürzen. Dabei empfiehlt es sich, die Haltearme in ihren Querschnittsabmessungen so gering wie möglich auszuführen, so daß die Aufspannflächen in Richtung der Schwenkachsen wandern, was zu noch kürzeren Verfahrwegen führt.

Ideal wäre insoweit, wenn die Abstandsflächen der Spannelemente derart angeordnet sind, daß das zu bearbeitende Profil mit dem Schwerpunkt seiner Querschnittsfläche im Bereich der Schwenkachse der Haltearme zu liegen kommt. Dies läßt sich jedoch nur dann realisieren, wenn die Auflagefläche gegenüber den Außenabmessungen der Haltearme zurückgesetzt ist. Die zu bearbeitenden Hohlprofile kommen dann zwischen den Haltearmen zu liegen, so daß bei den üblichen Längserstreckungen der Maschinen nur relativ kurze Hohlprofile bearbeitet werden können.

Nach einer weiteren Ausführungsform der Erfindung sind die Haltearme parallel zur Längsrichtung des zu bearbeitenden Werkstückes an dem Maschinengestell verschiebbar gehalten. Durch Verschieben der Haltearme mit daran angeordneten Spannelementen kann das Werkstück an jeder beliebigen Stelle bearbeitet werden, ohne daß es ausgespannt und innerhalb der Aufspanneinrichtung verschoben werden muß.

Selbstverständlich können die Haltearme und damit die zugeordneten Spannelemente fix an dem Maschinengestell angeordnet sein. Durch Verbinden der Schwenkelemente, beispielsweise mittels einer Längsstrebe, lassen sich die Spannelemente in einfacher Weise gemeinsam verschwenken.

Die Arretierung der Spannelemente in der jeweiligen Schwenklage kann erfindungsgemäß dadurch realisiert werden, daß wenigstens ein Spannelement mit einer um die Schwenkachse des zugeordneten Haltearms verschwenkbaren Rastscheibe verbunden ist, welche mit einer Raste zusammenwirkt. Beispielsweise können über den Umfang der Rastscheibe in Winkelabständen von 90° Aussparungen vorgesehen sein, in welche eine federbelastete Raste eingreift. Selbstverständlich ist auch jede andere beliebige Schwenklage der Spannelemente beziehungsweise der wenigstens einen Rastscheibe denkbar. Neben einer manuellen Betätigung der Raste ist auch eine Druckmittelbetätigung mittels Kolben-Zylinder-Anordnungen möglich.

Alternativ zu einer Rastscheibe kann wenigstens ein Spannelement mit einem um die Schwenkachse des zugeordneten Haltearms verschwenkbaren Zahnradsegment verbunden sein, das mit einer Zahnstange in Eingriff steht. Bei dieser Ausführungsform ist in konstruktiv besonders vorteilhafter Weise durch eine Vorschubbewegung der Zahnstange gleichzeitig ein Schwenkantrieb für die Aufspanneinrichtung realisiert. Für die Vorschubbewegung der Zahnstange empfiehlt sich eine druckmittelbetätigte Kolben-Zylinder-Anordnung, vorzugsweise ein Tandem-Luftzylinder, so daß ein Vor- und Zurückschwenken der Aufspanneinrichtung in einfacher Weise ermöglicht ist.

Um eine Geräuschreduzierung und gleichzeitig ein Auffangen von Bearbeitungsspänen und dergleichen zu realisieren, kann sich nach der Erfindung wenigstens zwischen den Spannelementen und parallel zur Längsrichtung des zu bearbeitenden Profils eine etwa wannenförmige Aufnahme mit in ihren Wandungen vorgesehenen Öffnungen zum Hindurchführen des jeweiligen Bearbeitungswerkzeuges der Bearbeitungseinheit erstrecken. Durch entsprechendes Verschieben des Werkstückes in der wannenförmigen Aufnahme läßt sich eine Kollision der Bearbeitungseinheit mit der Wandung der Aufnahme vermeiden.

Eine geräuschminimierende Kapselung der gesamten Vorrichtung läßt sich dadurch erreichen, wenn nach der Erfindung wenigstens die Bearbeitungseinheit und die Aufspanneinrichtung innerhalb eines weitgehend geschlossenen Kastens mit einer aufklappbaren, vorzugsweise wenigstens bereichsweise transparenten Haube aufgenommen sind. Für die Hubbewegung der Bearbeitungseinheit ist nach der Erfindung ein im Dichtungsbereich zwischen Kasten und Haube nach außen ragender, über eine Hebelmechanik auf die Bearbeitungseinheit wirkender Handhebel vorgesehen, welcher in einem Querschnitt ovalen, vorzugsweise schiffchenartig ausgebildeten Rohr geführt ist. Hierdurch ist eine besonders gute Abdichtung des Rohres mittels Dichtungen am Rand der Haube und dem Rand des Kastens ermöglicht.

Weitere Ziele, Vorteile, Merkmale und Anwendungsmöglichkeiten der vorliegenden Erfindung ergeben sich aus den nachfolgenden Beschreibungen von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine Stirnansicht einer möglichen Ausführungsform einer erfindungsgemäßen Vorrichtung in einer ersten Schwenkstellung der Aufspanneinrichtung,
- Figur 2: eine Draufsicht auf die Vorrichtung gemäß Figur 1,
- Figur 3: eine Seitenansicht der Vorrichtung gemäß Figur 1,
- Figur 4: eine etwas vergrößerte Darstellung der Vorrichtung in der Schwenkstellung gemäß Figur 1,
- Figur 4a: eine Draufsicht auf die Ansicht gemäß Figur 4,
- Figuren 5 und 6: zwei weitere Schwenkstellungen bzw. Bearbeitungsstellungen, jeweils in einer Stirnansicht ähnlich der Figur 1,
- Figur 7: eine weitere Ausführungsform einer erfindungsgemäßen Vorrichtung zur mehrseitigen Bearbeitung von Hohlprofilen,
- Figur 8: eine Draufsicht auf die Vorrichtung gemäß Figur 7,
- Figur 9: eine Seitenansicht der Vorrichtung gemäß Figur 7,
- Figur 10: einen Teilquerschnitt einer weiteren Ausführungsform einer erfindungsgemäßen Vorrichtung mit einer geräuschmindernden Kapselung,
- Figur 11: eine Draufsicht auf die Vorrichtung gemäß Figur 11,
- Figur 12: eine Seitenansicht der Vorrichtung gemäß Figur 10,
- Figur 13: eine wiederum andere Ausführungsform einer erfindungsgemäßen Vorrichtung mit einer geräuschmindernden Kapselung,
- Figur 14: eine Ansicht der Vorrichtung gemäß Figur 13 von der Vorderseite her,
- Figur 15: eine Draufsicht auf die Vorrichtung gemäß Figur 13,
- Figur 16: eine vergrößerte Darstellung eines Ausschnittes der Vorrichtung gemäß Figur 13 und
- Figur 17: die Schnittdarstellung gemäß Figur 14.

Die in den Figuren dargestellte Vorrichtung dient zur Bearbeitung eines Hohlprofils 1, bspw. für die Herstellung von Tür- oder Fensterrahmen oder auch eines stabförmigen Werkstückes. Dabei sollen in drei jeweils im rechten Winkel zueinander liegenden Seitenflächen des Hohlprofils 1, das bspw. aus Aluminium besteht, Durchbrüche gefräst werden. Hierzu ist als Bearbeitungseinheit 2 ein Fräskopf mit vertikaler Fräsachse vorgesehen.

Die Vorrichtung weist ein Maschinengestell 3 auf mit einer Fräsbank 4, auf welcher ein Längssupport 5 verfahrbar ist. Auf dem Längssupport 5 ist ein Quersupport 6 gelagert, an welchem wiederum ein den Fräskopf 2 haltender Tiefensupport 7 verfahrbar ist.

Selbstverständlich sind auch andere Ausgestaltungen für die wenigstens eine in drei Achsen verfahrbare Bearbeitungseinheit 2 denkbar.

Zur Aufnahme des stabförmigen Hohlprofils 1 sind bei dem hier gewählten Ausführungsbeispiel vier Spannelemente 10 vorgesehen, welche unabhängig voneinander an einer an der Fräsbank 4 bzw. dem Maschinengestell 3 angeordneten Schiene 9 in Längsrichtung verschiebbar sind. Die Spannelemente 10 sind bei dem hier gewählten Ausführungsbeispiel U-förmig ausgebildet und weisen Spannzylinder 11 auf. Die Spannelemente 10 sind jeweils mit einer Rastscheibe 12 verbunden, deren Drehachse 13 an einem mit einer Konsole 14 verbundenen Haltearm 15 gelagert ist. Die Konsolen 14 sind über U-förmige Führungen an der Schiene 9 längsverschieblich gehalten. An den Haltearmen 15 jedes Spannelementes 10 befindet sich bei dem hier gewählten Ausführungsbeispiel ein Rastzylinder 16, mittels welchem ein Rastbolzen 17 in um 90° gegeneinander versetzt angeordnete Aussparungen 18 der Rastscheibe 12 in Eingriff gebracht werden kann. Selbstverständlich ist jede andere beliebige Winkeleinteilung denkbar.

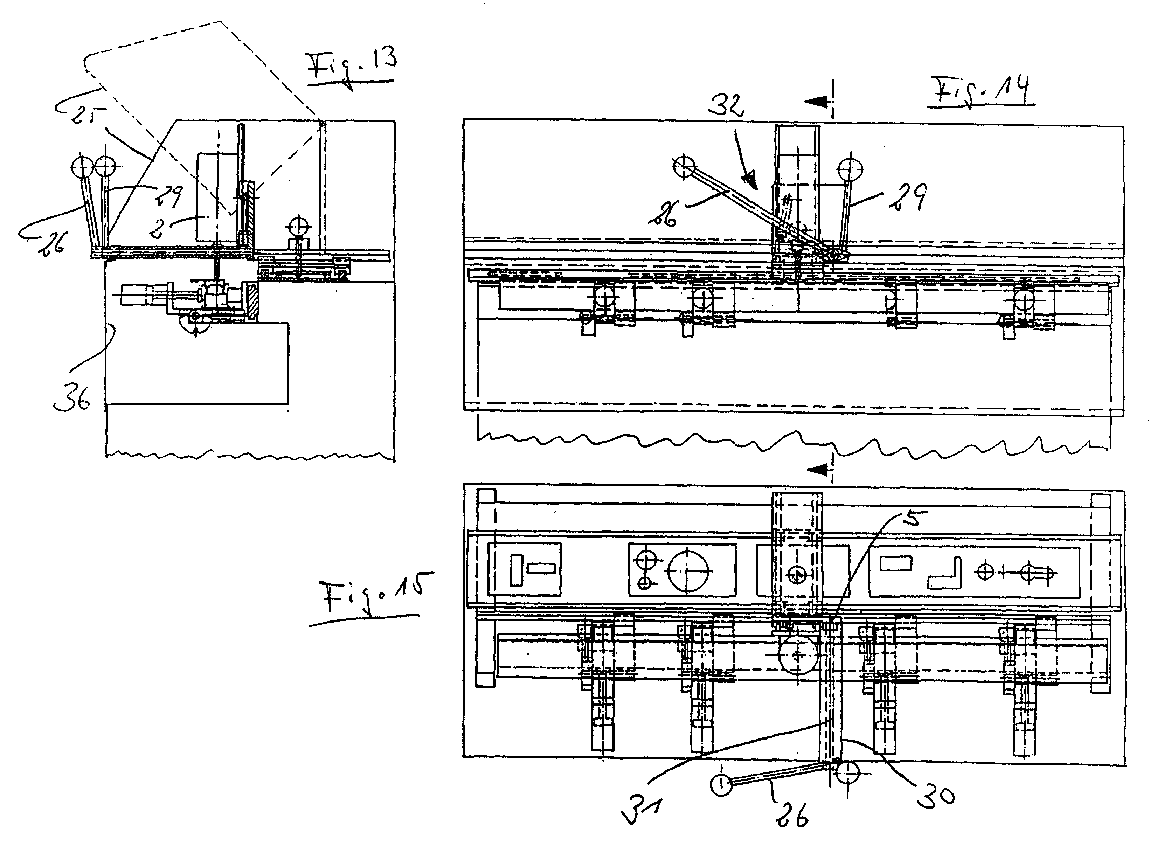

Wie aus Figuren 4, 5 und 6 ersichtlich, überragt die Aufspannfläche 33 der Spannelemente 10 in den einzelnen Schwenklagen die jeweils angrenzende Außenseite 37, 38 bzw. 39 der Haltearme 15 mit nur geringem Abstand. Hierdurch werden die Verfahrwege der Bearbeitungseinheit 2 zum Bearbeiten der einzelnen Seitenwände des Hohlprofiles 1 nach dem jeweiligen Schwenkvorgang erheblich reduziert, so daß wesentlich geringere Taktzeiten für die Bearbeitung des Hohlprofiles 1 erreicht werden können. Günstig hierfür ist auch, wenn die Haltearme in ihrem Querabmessungen so gering wie möglich gehalten werden, wodurch die Auflageflächen 32 in Richtung der Schwenkachse wandern.

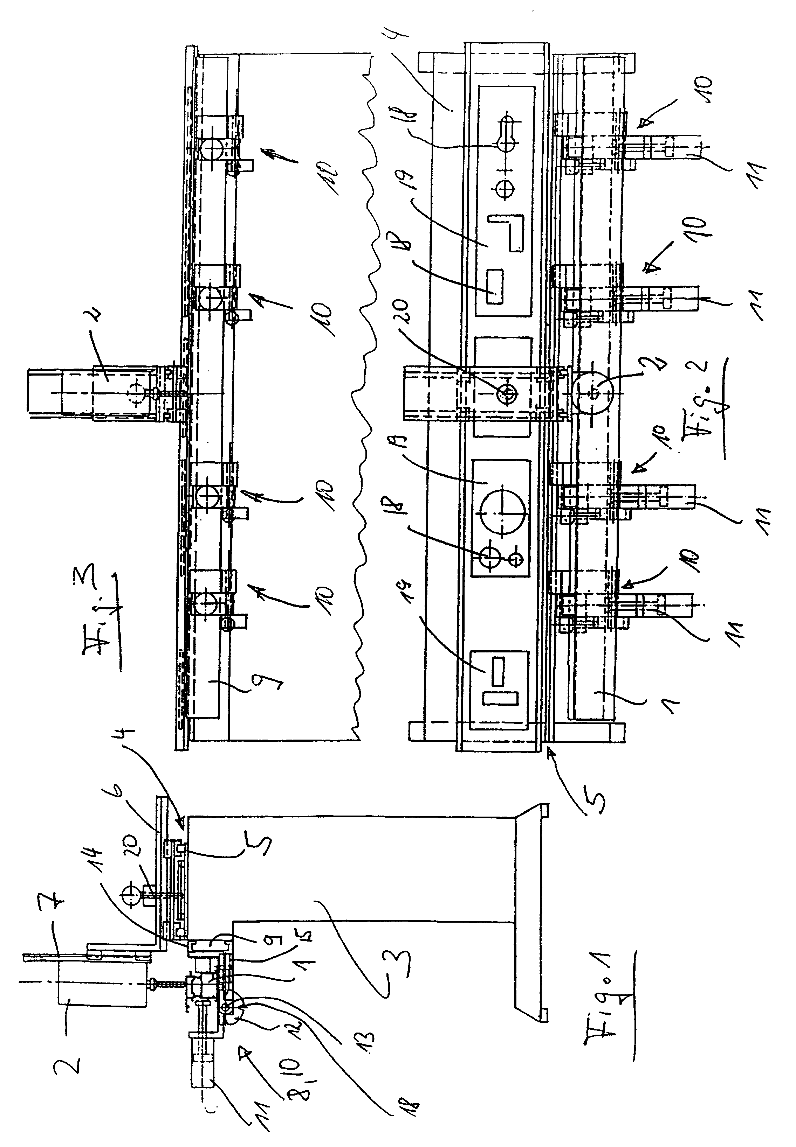

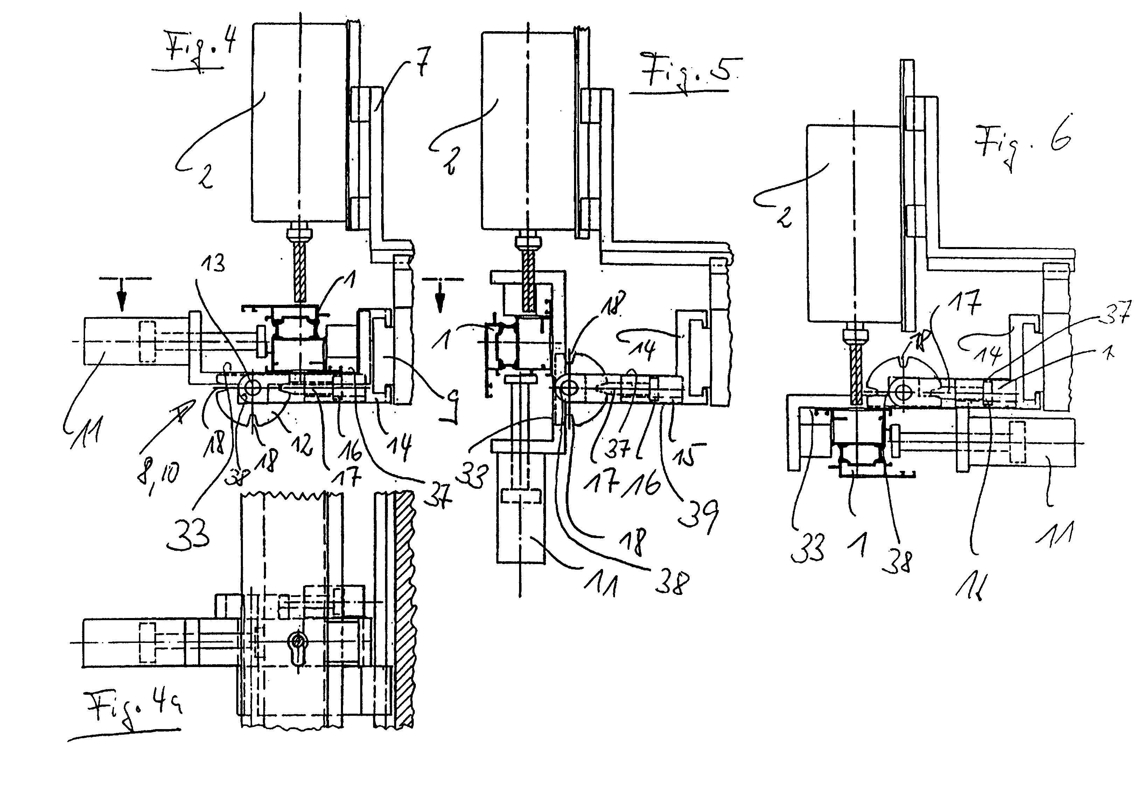

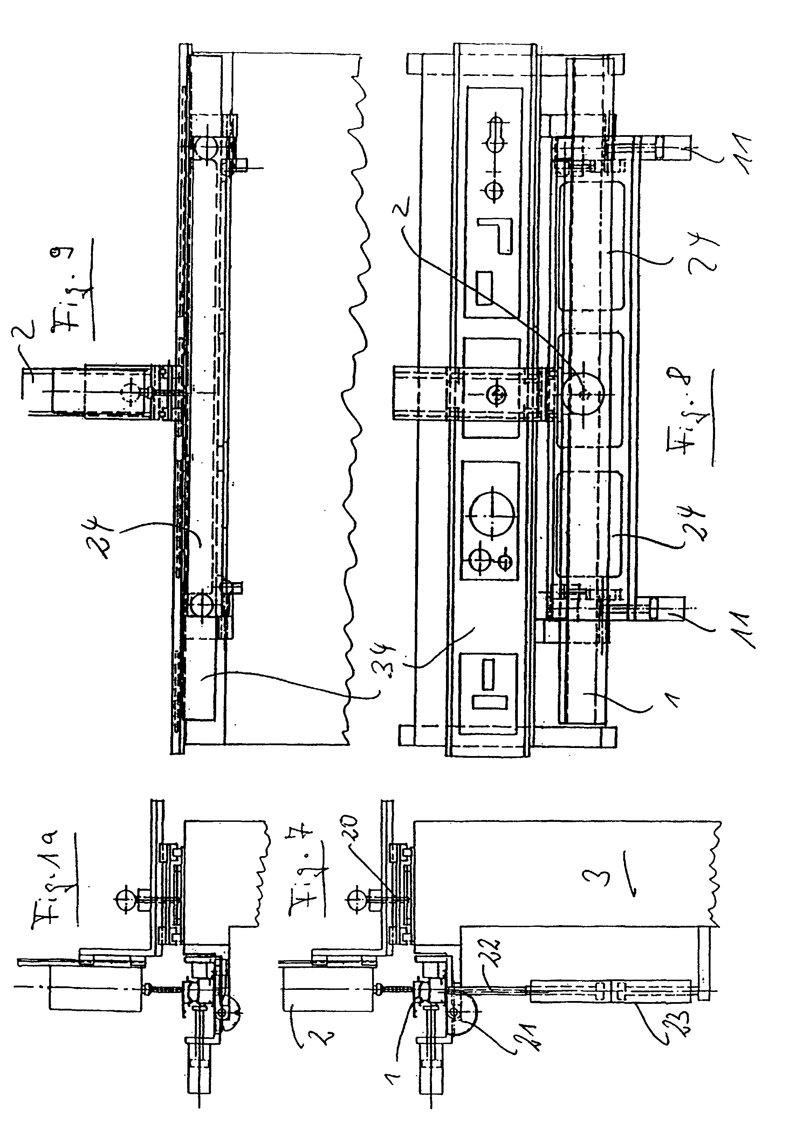

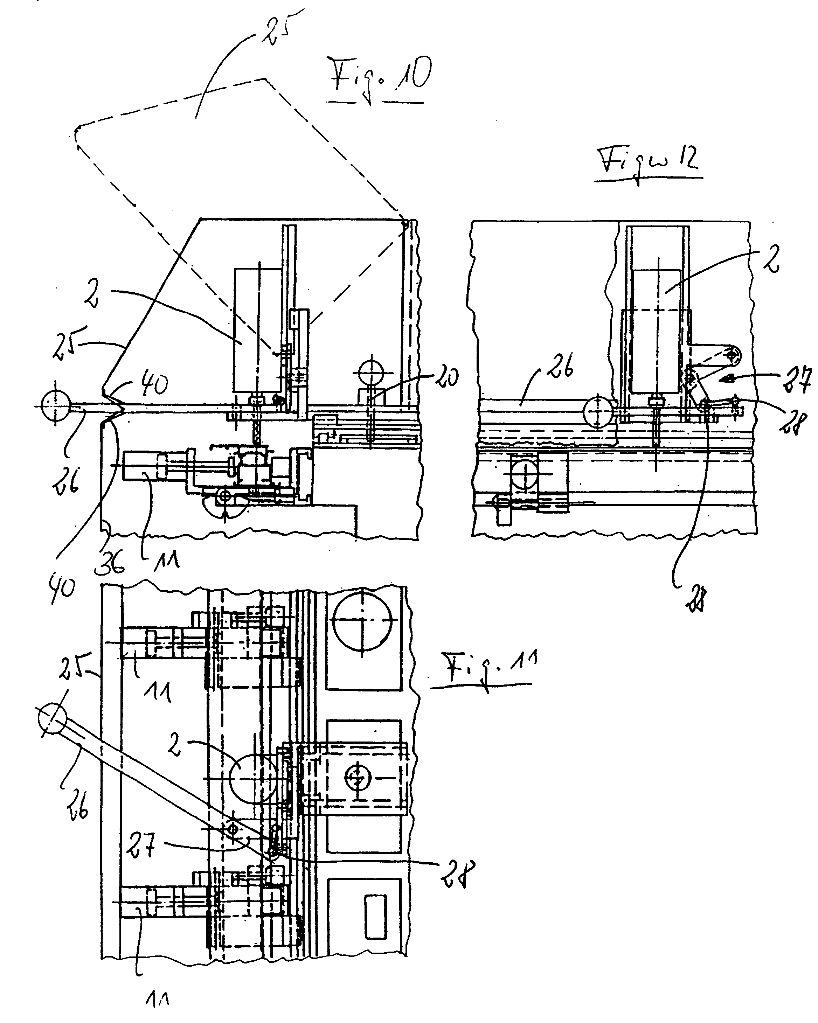

Bei dem Ausführungsbeispiel gemäß Figuren 1 bis 6 kann die Aufspanneinrichtung 8 durch gemeinsames Betätigen der Rastzylinder 16 aller Spanneinheiten 10 nacheinander in die drei Schwenkstellungen gebracht werden, wie sie in Figuren 1, 4 bis 6 dargestellt sind. Dabei kann in der in Figur 1 gezeigten Schwenkstellung wird die obere Seitenwand des Hohlprofiles 1 bearbeitet, wobei der Fräser 35 in das Hohlprofil 1 eintaucht und die Bearbeitung durchführt.

Selbstverständlich kann anstelle von Rastzylindern eine mechanische Arretierung, beispielsweise mittels federbetätigter Rasten vorgesehen werden.

Bei den hier gewählten Ausführungsbeispielen ist eine Betätigung der Supporte 5 bis 7 mittels (nicht dargestellten) Handhebeln vorgesehen, wobei die in Schablonen 19 enthaltenen Aussparungen 18 bzw. Fräsbilder, wie bspw. für die Aufnahmen von Schlössern oder Beschlägen für Fenster- und Türrahmen, mittels eines Kopierstiftes 20 auf die zu bearbeitenden Hohlprofile 1 übertragen werden.

Selbstverständlich ist es auch möglich, die Betätigung der Schlitten über eine CNC-Steuerung vorzunehmen, wobei dann Kopierschablonen und -stifte entfallen können.

Nachdem die obere Seitenwand des Hohlprofils 1 bearbeitet ist, wird der Fräser 35 in seine Ausgangsstellung angehoben und die Aufspanneinrichtung 8 entweder mechanisch, wie dies noch in Bezug auf Figuren 7 bis 9 beschrieben wird, oder per Hand um 90° in die in Figur 4 gezeigte Schwenkstellung geschwenkt. Daraufhin erfolgt die Bearbeitung der zweiten Seitenfläche des Hohlprofils 1. In der dritten, in Figur 6 gezeigten Schwenkstellung wird die dritte Seitenwand des Hohlprofils 1 in der schon beschriebenen Weise bearbeitet. Anschließend wird die Aufspanneinrichtung 8 mit den einzelnen Spannelementen 10 wieder in die in Figur 1 gezeigte Ausgangsstellung zurückgeschwenkt. Nach dem Lösen der Spannzylinder 11 kann das fertig bearbeitete Hohlprofil 1 herausgenommen werden.

Die längsverschieblichen Spannelemente 10 sind so an dem Hohlprofil 1 anzuordnen, daß keine Kollision mit dem Bearbeitungswerkzeug 35 auftreten können.

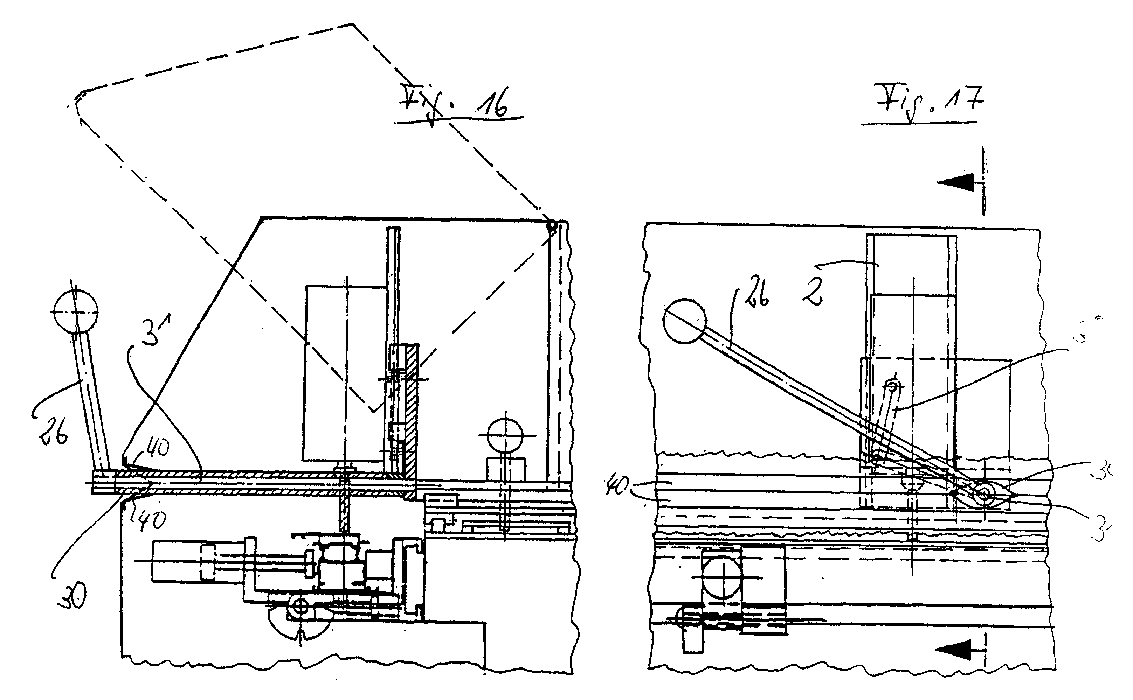

Wie insbesondere aus Figuren 5 und 6 ersichtlich, sollen die Haltearme 15, welche an ihrem einen Ende die Rastscheibe 12 tragen und an ihrem anderen Ende mit der jeweiligen Konsole 14 verbunden sind, in ihrer Stärke so gering wie möglich gehalten werden, um auch insoweit die Verfahrwege der Bearbeitungseinheit 2 bei den einzelnen Schwenkvorgängen voll ausnutzen zu können bzw. nicht unnötig groß ausbilden zu müssen.

Bei dem Ausführungsbeispiel gemäß Figuren 7 bis 9 sind für das Verschwenken des Hohlprofils 1 anstelle von Rastscheiben 12 Zahnradsegmente 21 vorgesehen, welche mit jeweils einer Zahnstange 22 in Eingriff stehen. Jede Zahnstange 22 bildet die Kolbenstange eines Tandemzylinders, insbesondere Tandem-Luftzylinders 23, so daß entsprechend Figuren 5 und 6 jeweils um 90° verdrehte Schwenkstellungen des Hohlprofiles 1 eingestellt werden können.

Weiterhin ist, wie dies insbesondere aus Figuren 8 und 9 ersichtlich, die Aufnahme für das Hohlprofil 1 in einer sich in Längsrichtung erstreckenden, durchgehenden wannenförmigen Aufnahme 34 mit entsprechenden Öffnungen 24 in den einzelnen Wandungen aufgenommen. Jeweils am Ende der Aufnahme 34 befindet sich ein Luftzylinder 23 mit Zahnstange 22, welche mit einem zugeordneten Zahnradsegment 21 der Aufnahme 34 kämmt. Durch Verschieben des Hohlprofiles 1 in der wannenförmigen Aufnahme 34 läßt sich eine Kollision der Bearbeitungseinheit 2 mit der Wandung der Aufnahme vermeiden.

Um der ständig steigenden Forderung nach lärmgeschützten Maschinen nachzukommen, weist die in Figuren 10, 11 und 12 dargestellte weitere Ausführungsform der Erfindung eine Kapselung mit einer oberhalb des Maschinengestells zu liegen kommenden verschwenkbaren und vorzugsweise zumindest bereichsweise transparenten Haube 25 auf. Um die Verfahrbarkeit der Fräsköpfe 2 zu gewährleisten, ist ein Betätigungshebel 26 vorgesehen, welcher über einen Winkelhebel 27 und zwei Kugelgelenke 28 ein Anheben und Absenken der Bearbeitungseinheit bzw. des Fräskopfes 2 ermöglicht, wie dies insbesondere aus Figuren 12 und 11 zu ersehen ist. Durch ein Verschwenken des Hebels 26 in einer horizontalen Ebene erfolgt das Absenken bzw. Anheben der Bearbeitungseinheit 2.

Dabei ergibt sich eine Vereinfachung bei der Handhabung bzw. beim Verschieben der Bearbeitungseinheit 2 wenn, wie aus Figuren 13 bis 17 ersichtlich ist, ein zusätzlicher Griff 29 am Längssupport 5 angreift. Durch Ergreifen beider Griffe 26, 29 durch die Bedienerperson ist ein einfaches Verfahren der Bearbeitungseinheit 2 zum Abtasten der Schablonen ermöglicht. Das Anheben und Absenken der Bearbeitungseinheit 2 erfolgt bei der Ausführungsform gemäß Figuren 13 bis 17 durch Verschwenken des Hebels 26 in einer vertikalen Ebene, wobei ein Kniehebelmechanismus 32 zwischen Hebel 26 und Bearbeitungseinheit 2 wirkt.

Um die Geräuschdämmung der Maschine nicht durch zusätzliche Öffnungen für die beiden Hebel 26 und 29 zu beeinträchtigen, weist der Hebel 29 ein an dem Längssupport 5 befestigtes Rohrstück 30 auf, welches über die Haube 25 nach außen reicht. Innerhalb des Rohrstückes 30 ist eine Stange 31 des Schwenkhebels 26 verdrehbar gelagert.

Eine besonders gute Abdichtung des Rohres 30 mittels Dichtungen 40 an dem Rand der Haube 25 und an dem unteren Maschinengehäuse beziehungsweise am Rand des Kastens 36 läßt sich dadurch realisieren, daß das Rohr 30 einen schiffchenartigen Querschnitt aufweist, wie dies insbesondere aus Figur 17 zu entnehmen ist.

### Bezugszeichenliste

- 1: Hohlprofil
- 2: Fräskopf
- 3: Maschinengestell
- 4: Fräsbank
- 5: Längssupport
- 6: Quersupport
- 7: Tiefensupport
- 8: Aufspanneinrichtung
- 9: Schiene
- 10: Spannelement
- 11: Spannwerkzeug
- 12: Rastscheibe
- 13: Schwenkachse
- 14: Konsole
- 15: Haltearm
- 16: Rastzylinder
- 17: Rastbolzen
- 18: Aussparung
- 19: Schablone
- 20: Kopierstift
- 21: Zahnradsegment
- 22: Zahnstange
- 23: Luftzylinder
- 24: Öffnung
- 25: Haube
- 26: Betätigungshebel
- 27: Winkelhebel
- 28: Kugelgelenk
- 29: Griff
- 30: Rohrstück
- 31: Stange
- 32: Kniehebelmechanismus
- 33: Aufspannfläche
- 34: Aufnahme
- 35: Bearbeitungswerkzeug
- 36: Kasten
- 37: Außenseite
- 38: Außenseite
- 39: Außenseite
- 40: Dichtung

## Patentansprüche

1. Vorrichtung zum mehrseitigen Bearbeiten von Hohlprofilen (1) oder dergleichen stabförmigen Werkstücken mittels wenigstens einer an einem Maschinengestell (3) verfahrbaren Bearbeitungseinheit (2), mit einer in dem Maschinengestell (3) gelagerten Aufspanneinrichtung (8) für das zu bearbeitende Hohlprofil (1), wobei die Aufspanneinrichtung (8) um eine parallel zur Längsachse des Hohlprofils (1) verlaufende Schwenkachse (13) schwenkbar gelagert ist und die Aufspanneinrichtung (8) wenigstens zwei Spannelemente (10) sowie eine Aufspannfläche (33) für das zu bearbeitende Werkstück (1) aufweist, welche schwenkbar an mit dem Maschinengestell (3) verbundenen Haltearmen (15) gelagert und in unterschiedlichen Schwenklagen arretierbar ist, **dadurch gekennzeichnet, dass** die Haltearme (15) seitlich von dem Maschinengestell (3) abkragen und die Schwenkachse (13) im Bereich des freien Endes der Haltearme (15) angeordnet ist.

2. Vorrichtung nach Anspruch 1, **dadurch gekennzeichnet, dass** die Aufspannflächen (33) der Spannelemente (10) in den jeweiligen Schwenkstellungen die jeweils angrenzende Außenseite (37, 38, 39) der Haltearme (15) mit relativ geringem Abstand überragen.

3. Vorrichtung nach Anspruch 1, **dadurch gekennzeichnet**, das die Aufspannflächen (33) der Spannelemente (10) derart angeordnet sind, dass das zu bearbeitende Profil (1) mit dem Schwerpunkt seiner Querschnittsfläche im Bereich der Schwenkachse (13) der Haltearme (15) zu liegen kommt.

4. Vorrichtung nach Anspruch 1 bis 3, **dadurch gekennzeichnet, dass** die Haltearme (15) geringe Querschnittsabmessungen aufweisen, so dass die Aufspannfläche (33) nahe der Schwenkachse (13) positionierbar ist.

5. Vorrichtung nach einem der Ansprüche 1 bis 3, **dadurch gekennzeichnet, dass** die Haltearme (15) parallel zur Längsrichtung des zu bearbeitenden Werkstückes (1) an dem Maschinengestell (3) verschiebbar gehalten sind.

6. Vorrichtung nach einem der vorhergehenden Ansprüche, **dadurch gekennzeichnet, dass** wenigstens ein Spannelement (10) mit einer um die Schwenkachse (13) des zugeordneten Haltearms (15) verschwenkbaren Rastscheibe (12) verbunden ist, welche mit einer Raste (17) zusammenwirkt.

7. Vorrichtung nach einem der Ansprüche 1 bis 5, **dadurch gekennzeichnet, dass** wenigstens ein Spannelement (10) mit einem um die Schwenkachse (13) des zugeordneten Haltearms (15) verschwenkbaren Zahnradsegment (21) verbunden ist, das mit einer Zahnstange (22) in Eingriff steht.

8. Vorrichtung nach Anspruch 6, **dadurch gekennzeichnet, dass** für die Vorschubbewegung der Zahnstange (22) eine druckmittelbetätigte Kolben-Zylinderanordnung, vorzugsweise ein Tandem-Luftzylinder (23) vorgesehen ist.

9. Vorrichtung nach einem der vorhergehenden Ansprüche, **dadurch gekennzeichnet, dass** sich wenigstens zwischen den beiden Spannelementen (10), parallel zur Längsrichtung des zu bearbeitenden Profils (1) eine etwa wannenförmige Aufnahme (34) mit in den Wandungen vorgesehenen Öffnungen (24) zum Hindurchführen des jeweiligen Bearbeitungswerkzeuges (35) der Bearbeitungseinheit (2) erstreckt.

10. Vorrichtung nach einem der Ansprüche 1 bis 7, **dadurch gekennzeichnet, dass** wenigstens die Bearbeitungseinheit (2) und die Aufspanneinrichtung (8) innerhalb eines weitgehend geschlossenen Kastens (36) mit einer aufklappbaren, vorzugsweise wenigstens bereichsweise transparenten Haube (25) aufgenommen sind.

11. Vorrichtung nach Anspruch 10, **dadurch gekennzeichnet, dass** für die Hubbewegung der Bearbeitungseinheit (2) ein im Dichtungsbereich (40) zwischen Kasten (36) und Haube (25) nach außen ragender über eine Hebelmechanik (27, 32) auf die Bearbeitungseinheit (2) wirkender Handhebel (26) vorgesehen ist, welcher in einem im Querschnitt ovalen, vorzugsweise schiffchenartig ausgebildeten Rohr (30) geführt ist.

## Claims

1. Device for multi-sided processing of hollow profile members (1) or like rod-shaped workpieces by means of at least one processing unit (2) movable at a machine frame (3), with a clamping device (8), which is mounted in the machine frame (3), for the hollow profile member (1) to be processed, wherein the clamping device (8) is mounted to be pivotable about a pivot axis (13) extending parallel to the longitudinal axis of the hollow profile member (1) and the clamping device (8) comprises at least two tightening elements (10) as well as a clamping surface (33) for the workpiece (1) to be processed, which is pivotably mounted at mounting arms (15) connected with the machine frame (3) and which is lockable in different pivot positions, **characterised in that** the mounting arms (15) laterally project from the machine frame (3) and the pivot axis (13) is arranged in the region of the free end of the mounting arms (15).

2. Device according to claim 1, **characterised in that** the clamping surfaces (33) of the tightening elements (10) in the respective pivot settings project with relatively small spacing beyond the respectively adjoining outer side (37, 38, 39) of the mounting arms (15).

3. Device according to claim 1, **characterised in that** the clamping surfaces (33) of the tightening elements (10) are arranged in such a manner that the profile member (1) to be processed comes to lie by the centre of mass of its cross-sectional area in the region of the pivot axis (13) of the mounting arms (15).

4. Device according to claim 1 to 3, **characterised in that** the mounting arms (15) have small cross-sectional dimensions so that the clamping surface (33) is positionable close to the pivot axis (13).

5. Device according to one of claims 1 to 3, **characterised in that** the mounting arms (15) are mounted at the machine frame (3) to be displaceable parallel to the longitudinal direction of the workpiece (1) to be processed.

6. Device according to one of the preceding claims, **characterised in that** at least one clamping element (10) is connected with a detent disc (12) which is pivotable about the pivot axis (13) of the associated mounting arm (15) and which co-operates with a detent (17).

7. Device according to one of claims 1 to 5, **characterised in that** the at least one clamping element (10) is connected with a gearwheel segment (21) which is pivotable about the pivot axis (13) of the associated mounting arm (15) and which is disposed in engagement with a rack (22).

8. Device according to claim 6, **characterised in that** a piston-cylinder arrangement actuable by a pressure medium, preferably a tandem pneumatic cylinder (23), is provided for the advance movement of the rack (22).

9. Device according to one of the preceding claims, **characterised in that** an approximately pan-shaped receptacle (24) with openings (24), which are provided in the walls, for passage therethrough of the respective processing tool (35) of the processing unit (2) extends at least between the two tightening elements (10) and parallel to the longitudinal direction of the profile member (1) to be processed.

10. Device according to one of claims 1 to 7, **characterised in that** at least the processing unit (2) and the clamping device (8) are received within a substantially closed box (36) with a foldable hood (25) which is preferably transparent at least in regions.

11. Device according to claim 10, **characterised in that** a hand lever (26) projecting outwardly and acting by way of a lever mechanism (27, 32) on the processing unit (2) is provided in a sealing region (40) between box (26) and hood (25) for the stroke movement of the processing unit (2) and is guided in a tube (30) which is oval in cross-section and preferably formed to be shuttle-shaped.

## Revendications

1. Dispositif pour l'usinage en plusieurs phases de profilés creux (1) ou de pièces à usiner analogues en forme de barres à l'aide d'au moins une unité d'usinage (2) déplaçable le long d'un bâti de machine (3), comportant un dispositif de serrage (8) monté sur le bâti de machine (3) pour le profilé creux à usiner (1), dans lequel le dispositif de serrage (8) est monté de manière à pouvoir pivoter autour d'un axe de pivotement (13) parallèle à l'axe longitudinal du profilé creux (1) et le dispositif de serrage (8) comporte au moins deux éléments de serrage (10) ainsi qu'une surface de serrage (33) pour la pièce à usiner (1), qui est montée de manière à pouvoir pivoter sur des bras de retenue (15) reliées au bâti de machine (3) et peut être bloquée dans différentes positions de pivotement, **caractérisé en ce que** les bras de retenue (15) font saillie latéralement à partir du bâti de machine (3) et l'axe de pivotement (13) est disposé dans la zone de l'extrémité libre des bras de retenue (15).

2. Dispositif selon la revendication 1,
**caractérisé en ce que**, dans les positions respectives de pivotement, les surfaces de serrage (33) des éléments de serrage (10) font saillie sur une distance relativement faible par rapport au côté extérieur respectivement contigu (37, 38, 39) des bras de retenue (15).

3. Dispositif selon la revendication 1, **caractérisé en ce que** les surfaces de serrage (33) des éléments de serrage (10) sont disposées de telle sorte que le centre de gravité de la surface en coupe transversale du profilé à usiner (1) vient se situer dans la zone de l'axe de pivotement (13) des bras de retenue (15).

4. Dispositif selon les revendications 1 à 3, **caractérisé en ce que** les bras de retenue (15) possèdent de faibles dimensions transversales de sorte que la surface de serrage (33) peut être positionnée à proximité de l'axe de pivotement (13).

5. Dispositif selon l'une des revendications 1 à 3, **caractérisé en ce que** les bras des retenue (15) sont retenus avec possibilité de déplacement parallèlement à la direction longitudinale de la pièce à usiner (1) sur le bâti de machine (3).

6. Dispositif selon l'une des revendications précédentes, **caractérisé en ce qu'**au moins un élément de serrage (10) est relié à un disque d'encliquetage (12), qui peut pivoter autour de l'axe de pivotement (13) du bras de retenue associé (15) et coopère avec un organe d'encliquetage (17).

7. Dispositif selon l'une des revendications 1 à 5,**caractérisé en ce qu'**au moins un élément de serrage (10) est relié à un segment de roue dentée (21), qui peut pivoter autour de l'axe de pivotement (13) du bras de retenue associé (15) et engrène avec une crémaillère (22).

8. Dispositif selon la revendication 6, **caractérisé en ce que** pour le déplacement d'avance de la crémaillère (22) il est prévu un dispositif à piston et cylindre actionné par un fluide sous pression, de préférence un vérin pneumatique tandem (23).

9. Dispositif selon l'une des revendications précédentes, **caractérisé en ce qu'**au moins entre les deux éléments de serrage (10) s'étend, parallèlement à la direction longitudinale du profilé à usiner (1), un évidement approximativement en forme de cuvette (34) possédant des ouvertures (24) aménagées dans les parois, pour le passage de l'outil d'usinage respectif (35) de l'unité d'usinage (2).

10. Dispositif selon l'une des revendications 1 à 7, **caractérisé en ce qu'**au moins l'unité d'usinage (2) et le dispositif de serrage (8) sont logés à l'intérieur d'un boîtier (36), qui est fermé dans une large mesure et comporte un capot rabattable (25), de préférence transparent au moins par endroits.

11. Dispositif selon la revendication 10, **caractérisé en ce que**, pour le déplacement de l'unité d'usinage (2) sur sa course, il est prévu un levier manuel (26), qui fait saillie extérieurement dans la zone d'étanchéité (40) entre la boîte (36) et le capot (25) et agit sur l'unité d'usinage (2) au moyen d'un mécanisme à leviers (27, 32) et est guidé dans un tube (30), qui possède une section transversale ovale et est de préférence réalisé sous la forme d'une nacelle.
